# EUROPÄISCHE PATENTSCHRIFT

(11) **EP 3 418 680 B1**
(45) Veröffentlichungstag und Bekanntmachung des Hinweises auf die Patenterteilung: **04.03.2020**
(21) Anmeldenummer: 18176462.2
(22) Anmeldetag: 07.06.2018
(51) Int. Cl.: G01B 11/26, G01B 11/00

(54) **SYSTEM UND VERFAHREN ZUR POSITIONIERUNGSMESSUNG**
SYSTEM AND METHOD FOR POSITION MEASUREMENT
SYSTÈME ET PROCÉDÉ DE MESURE DE POSITIONNEMENT

(30) Priorität: 19.06.2017 DE 102017210166
(43) Veröffentlichungstag der Anmeldung: 26.12.2018
(73) Patentinhaber: Eumetron GmbH, Referenzlabor für Längenmesstechnik, 73430 Aalen (DE)
(72) Erfinder: Hageney, Theo, 73432 Aalen (DE)
(74) Vertreter: Roth, Sebastian

(56) Entgegenhaltungen:
- US-A1- 2013 155 396
- US-A1- 2014 055 778
- US-A1- 2014 078 517
- US-B2- 7 312 862

## Beschreibung

Die vorliegende Erfindung betrifft ein Messsystem, mit dem die Positionierung (Ort und Lage) eines Elements oder Körpers im Raum insbesondere hinsichtlich aller sechs Freiheitsgrade (6 Degrees of Freedom (6DOF)) präzise gemessen werden kann. Das Messsystem der vorliegenden Erfindung kann beispielweise zum Einmessen von Werkzeugmaschinen (WZM) oder zum Kalibrieren von Koordinatenmessgeräten (KMG) eingesetzt werden. Das Messsystem kann auch zur genauen Bestimmung der Positionierung von Gegenständen oder Personen im Raum, beispielweise für die Virtuelle Realität (VR) oder in der Medizin bei Operationen eingesetzt werden.

Es ist bekannt, dass Hersteller von KMG zur Verbesserung der Messgenauigkeit der Geräte das Verfahren der computerunterstützten Genauigkeitssteigerung (Computer Aided Accuracy (CAA)) verwenden. Dabei werden die KMG mit dafür geeigneten Messsystemen kalibriert, beziehungsweise eingemessen. Leider erfordern alle bekannten Messsysteme einen sehr hohen Aufwand für das Einmessen. Zudem sind alle bekannten Messsysteme nur durch entsprechend geschulte Spezialisten zu bedienen.

Neuerdings verwenden auch viele WZM Korrekturalgorithmen, wie beispielsweise CAA, so dass diese WZM ebenfalls mit einem geeigneten Messsystem eingemessen werden müssen. Entsprechend kommen hier dieselben Nachteile wie bei der Kalibrierung von KMG zu tragen.

Es gibt ferner kein bekanntes Messsystem, mit dem es möglich ist, beispielweise das Tastsystem eines KMG oder die Trajektorie eines Tool Center Point (TCP) einer WZM zu messen und das Messergebnis online und in Echtzeit zu verfolgen. Auch im Bereich der VR und in der Medizintechnik ist es oft vorteilhaft oder sogar notwendig, die gemessene Positionierung von beispielsweise einem medizinischen Gegenstand im Raum online und in Echtzeit verfolgen zu können.

Eine Echtzeitverfolgung kann derzeit lediglich mittels eines zum verwendeten Messsystem zusätzlichen Bildverarbeitung realisiert werden, beispielsweise mit einer strukturierten Beleuchtung oder Objekterkennung, oder mit einer Time of Flight (TOF) Kamera, oder mit aktiver Beleuchtung und Triangulation durch mehrere Kameras. Alle geeigneten Bildverarbeitungssysteme sind aber in ihrer Messgenauigkeit sehr begrenzt. Zudem werden oft mehrere dieser Bildverarbeitungssysteme an unterschiedlichen Orten benötigt, um eine Echtzeitverfolgung zu ermöglichen. Dies ist in der Regel aufwendig und teuer.

US 2013/0155396 A1 beschreibt einen optischen Detektor zum Orten der Bewegung eines Objekts in mehreren Dimensionen. US 2014/0078517 A1 beschreibt ein optisches Ortungssystem.

Ziel der vorliegenden Erfindung ist es, den Stand der Technik hinsichtlich der oben genannten Nachteile und Herausforderungen zu verbessern. Insbesondere ist es Aufgabe der vorliegenden Erfindung, ein verbessertes Messsystem bereitzustellen, das Positionierungsinformation eines Elements oder Körpers im Raum hochpräzise liefern kann, insbesondere für 6DOF. Das Messsystem soll zum Kalibrieren oder Einmessen eines KMG bzw. einer WZM verwendet werden können. Das Messsystem soll dabei ohne hohen Aufwand und durch jeden Fachmann bedienbar sein. Das Messsystem soll einerseits hochgenau arbeiten, es andererseits trotzdem ermöglichen, die Positionierungsinformation so schnell zu bestimmen, dass eine online-Verfolgung der Messung vorzugsweise in Echtzeit möglich ist.

Die Aufgabe der vorliegenden Erfindung wird durch das Messsystem gemäß dem unabhängigen Anspruch 1 bzw. durch das Verfahren gemäß dem unabhängigen Anspruch 16 gelöst. Weitere vorteilhafte Ausbildungen der vorliegenden Erfindung sind in den abhängigen Ansprüchen definiert.

Insbesondere betrifft die vorliegende Erfindung ein Messsystem, aufweisend eine Winkelmesseinheit mit wenigstens einem Sensor, ein der Winkelmesseinheit gegenüberliegendes reflektierendes Element, wenigstens eine seitens der Winkelmesseinheit angeordnete erste Lichtquelle, die dazu ausgelegt ist, Licht über das reflektierende Element auf den wenigstens einen Sensor zu senden, und wenigstens eine seitens des reflektierenden Elements angeordnete zweite Lichtquelle, die dazu ausgelegt ist, Licht auf den wenigstens einen Sensor zu senden, wobei die wenigstens eine erste Lichtquelle und die wenigstens eine zweite Lichtquelle jeweils in einem bekannten Abstand zu einem Referenzpunkt auf dem Sensor und einem Referenzpunkt auf dem reflektierenden Element angeordnet sind, wobei in einer Standardstellung des Messsystems der Referenzpunkt auf dem Sensor einen bekannten Abstand zu dem Referenzpunkt auf dem reflektierenden Element hat, wobei die Winkelmesseinheit dazu ausgelegt ist, wenigstens einen Einfallswinkel des Lichts jeder ersten Lichtquelle auf den wenigstens einen Sensor und wenigstens einen Einfallswinkel des Lichts jeder zweiten Lichtquelle auf den wenigstens einen Sensor zu bestimmen, und wobei die Winkelmesseinheit dazu ausgelegt ist, Positionierungsinformation des reflektierenden Elements aus den bestimmten Einfallswinkeln zu berechnen.

Positionierungsinformation ist hier Information hinsichtlich der Positionierung, also des Orts und der Lage, des reflektierenden Elements im Raum. Der Ort bezieht sich dabei vorzugsweise auf einen auf dem reflektierenden Element festgelegten Referenzpunkt, d.h. ist der Ort dieses Referenzpunktes im Raum. Die Lage bezieht sich vorzugsweise auf eine der Winkelmesseinheit zugewandte Fläche des reflektierenden Elements, auf welcher der Referenzpunkt festgelegt ist, d.h. ist bevorzugt die Lage dieser Fläche im Raum. Die Positionierungsinformation kann die absolute Positionierung des reflektierenden Elements im Raum, oder eine Änderung des Orts und/oder der Lage des reflektierenden Elements im Raum bezüglich einer früheren Positionierung oder einer definierten und bekannten Standardpositionierung umfassen. Die Positionierungsinformation kann dabei beispielweise eine Änderung im Ort (Translation) hinsichtlich wenigstens eines translatorischen Freiheitsgrades und/oder eine Änderung der Lage (Rotation) hinsichtlich wenigstens eines rotatorischen Freiheitsgrades enthalten. Vorzugsweise ist die Positionierungsinformation für alle 6DOF, enthält also Informationen hinsichtlich aller drei translatorischer Freiheitsgrade des reflektierenden Elements (gemessen am Referenzpunkt) und aller drei rotatorischer Freiheitsgrade des reflektierenden Elements (Drehung um Achsen durch den Referenzpunkt).

Die Positionierungsinformation des reflektierenden Elements kann insbesondere sein: ein absoluter Abstand z entlang der z-Achse gemessen vom Referenzpunkt zum Sensor und/oder eine translatorische Abweichung ztz entlang der z-Achse von einem eingestellten Abstand oder einem Standardabstand; eine translatorische Abweichung zty des Referenzpunktes entlang der y-Achse bzw. eine Abweichung ztx entlang der x-Achse, jeweils gemessen für eine bestimmten Abstand z; eine Rollwinkelabweichung zrz hervorgerufen durch Drehung des reflektierenden Elements um die z-Achse durch den Referenzpunkt, gemessen für einen bestimmten Abstand z; eine Gierwinkelabweichung zgx hervorgerufen durch Verdrehung des reflektierenden Elements um die x-Achse durch den Referenzpunt, gemessen für einen bestimmten Abstand z; eine Nickwinkelabweichung zny hervorgerufen durch Verdrehung des reflektierenden Elements um die y-Achse durch den Referenzpunkt, gemessen für einen bestimmten Abstand z.

Ein Einfallswinkel auf den Sensor kann hier jeder Winkel sein, der den Einfall des Lichts bezüglich des Sensors kennzeichnet. Beispielweise, ein Winkel zwischen einer Dimension des

Sensors andererseits sein. Oder ein Elevationswinkel zur Sensoroberfläche und ein Azimutwinkel des auf die Sensoroberfläche treffenden Lichts.

Das reflektierende Element ist nicht zwangsläufig vollständig reflektierend. Es weist aber zumindest einen reflektierenden Abschnitt auf, der derart ausgerichtet und beschaffen ist, dass er das Licht der ersten Lichtquelle auf den Sensor reflektiert. Dazu kann beispielweise eine der Winkelmesseinheit zugewandte Fläche (eine Teilfläche oder die ganze Oberfläche) reflektierend ausgebildet oder mit einer reflektierenden Schicht beschichtet sein. Ein reflektierender Abschnitt des reflektierenden Elements kann sogar veränderlich hinsichtlich seiner Position auf dem reflektierenden Element sein, um einfach eine Justierung des Messsystems vornehmen zu können. Das reflektierende Element bzw. dessen reflektierender Abschnitt reflektiert zumindest das Licht der wenigstens einen ersten Lichtquelle. Allerdings kann die Reflexionseigenschaft auf einen Wellenlängenbereich beschränkt sein der die Lichtwellenlänge der ersten Lichtquelle enthält. In anderen Worten können gegebenenfalls andere Lichtwellenlängen das reflektierende Element passieren, oder werden zumindest nicht daran reflektiert. Das reflektierende Element kann in anderen Worten also selektiv reflektierend sein, bspw. wellenlängenselektiv reflektierend.

Das Messsystem der vorliegenden Erfindung ist derart aufgebaut und unterteilt, dass verschiedene Komponenten auf zwei gegenüberliegenden Seiten des Messsystems angeordnet sind. Auf einer Seite sind insbesondere die Winkelmesseinheit und die wenigstens eine erste Lichtquelle angeordnet, auf der anderen Seite insbesondere das reflektierende Element und die wenigstens eine zweite Lichtquelle. Das reflektierende Element und die wenigstens eine zweite Lichtquelle können eine Messkopfeinheit des Messsystems bilden. Diese Messkopfeinheit kann an einem externen Element oder Körper angebracht werden, um anhand der gemessenen Positionierungsinformation des reflektierenden Elements auch die Positionierungsinformation dieses externen Elements oder Körpers gleichermaßen exakt zu bestimmen. Beispielsweise kann die Messkopfeinheit an einem beweglichen (verdrehbar und/oder verfahrbaren) Teil einer zu kalibrierenden KMG oder einer einzumessenden WZM angebracht werden. Die Winkelmesseinheit und die wenigstens eine erste Lichtquelle können eine Basiseinheit bilden, die fest montiert wird, entweder auch auf KMG oder WZM, oder anderweitig. Die Positionierungsinformation des reflektierenden Elements, also der Messkopfeinheit, vorzugsweise für 6DOF, kann präzise relativ zu der Basiseinheit bestimmt werden. Somit kann also auch Positionierungsinformation des beweglichen Teils der KMG oder WZM präzise bestimmt werden und bspw. mit einem Sollwert (bspw. einer CNC gesteuerten WZM) oder einem angezeigten Wert (bspw. ein Messwert eines KMG) abgeglichen werden.

Da für die Bestimmung der Positionierungsinformation nur die Einfallswinkelbestimmung der Lichtstrahlen notwendig ist, können Ort und Lage des reflektierenden Elements im Raum insbesondere sehr schnell von der Winkelmesseinheit berechnet werden. Dadurch ist sowohl eine online-Verfolgung der gemessenen Positionierung (also auch eine Positionierung bspw. eines beweglichen Teils einer WZM oder eines KMG, bspw. einer Trajektorie dieses beweglichen Teils) auch in Echtzeit möglich.

Eine zentrale Einheit des Messsystems ist die Winkelmesseinheit, die es ermöglicht die Einfallswinkel zu bestimmen, insbesondere mit sehr hoher Genauigkeit. Dies schafft die Voraussetzungen, um mittels der verwendeten ersten und zweiten Lichtquellen die Positionierungsinformation schnell und präzise ermitteln zu können. Dabei sind die wenigstens eine erste Lichtquelle und die wenigstens eine zweite Lichtquelle in definiertem und bekanntem Abstand zum Sensor (bspw. einem Referenzpunkt auf dem Sensor) bzw. zu dem auf dem reflektierenden Element festgelegten und bekannten Referenzpunk angeordnet.

Als Winkelmesseinheit kann jede bekannte Vorrichtung verwendet werden, die geeignet ist wenigstens einen Einfallswinkel von Licht aus einer Lichtquelle zu bestimmen. Der Einfallswinkel kann in einem einfachen Beispiel aus der gemessenen Lichteinfallsposition auf dem Sensor bestimmt werden (bzw. einer Position auf dem Sensor, an der die maximale Lichtstärke registriert wird).

Eine für die vorliegende Erfindung besonders geeignete Winkelmesseinheit ist in der europäischen Patentschrift EP 2 593 755 B1 beschrieben. Die darin vorgestellte Winkelmesseinheit weist in einem Beispiel einen zweidimensionalen Sensor auf, der eine Mehrzahl von empfindlichen Pixeln enthält, die in zwei Dimensionen angeordnet sind. Mit einer solchen Winkelmesseinheit können für eine Lichtquelle sowohl ein Einfallswinkel entlang einer ersten Dimension als auch ein Einfallswinkel entlang einer zweiten Dimension bestimmt werden. Es können also zwei Einfallswinkel bestimmt werden. Dies ist insbesondere mit dem in EP 2 593 755 B1 beschriebenen Verfahren möglich. In einem anderen Beispiel weist die Winkelmesseinheit aus EP 2 593 755 B1 mehrere eindimensionale Sensoren auf, wobei jeder Sensor eine Mehrzahl von empfindlichen Pixeln enthält, die jeweils in einer Dimension angeordnet sind. Die einzelnen Sensoren der Winkelmesseinheit sind dabei nicht parallel angeordnet. Für eine Lichtquelle können mit einer solchen Winkelmesseinheit zwei oder mehrere (falls mehr als zwei Sensoren vorhanden sind) Einfallswinkel entlang der jeweiligen Sensor-Ausrichtung bestimmt werden. Andere bekannte Winkelmesseinheiten messen beispielweise einen Elevationswinkel hinsichtlich einer Sensoroberfläche und einen Azimutwinkel der Lichteinfallsrichtung. Auch solche Winkelmesseinheiten können zur Bestimmung des wenigstens einen Einfallswinkel verwendet werden (sowohl Elevations- als auch Azimutwinkel werden hier als Einfallswinkel betrachtet).

Vorteilhafterweise lassen sich mittels der wenigstens einen zweiten Lichtquelle des Messsystems, die auf der Seite des reflektierenden Elements angeordnet ist, durch einfache geometrische Berechnungen, bzw. durch Triangulation, der absolute Abstand z entlang der z-Achse, die translatorische Abweichung ztz, die translatorischen Abweichungen zty bzw. ztx, sowie die Rollwinkelabweichung zrz sehr genau bestimmen. Die Nick- und Gierwinkelabweichungen zny bzw. zgx verursachen am Sensor hinsichtlich des Lichts der wenigstens einen zweiten Lichtquellen lediglich sehr kleine Winkeländerungen, so dass diese mit nur der wenigstens einen zweiten Lichtquelle nicht hochpräzise bestimmt werden können. Allerdings lassen sich diese Abweichungen mittels der ersten Lichtquelle, die auf der Seite der Winkelmesseinheit angeordnet ist, durch Triangulation sehr genau bestimmen. Insbesondere ist also die Anordnung von Lichtquellen auf beiden Seiten des Messsystems von entscheidendem Vorteil für dessen Messgenauigkeit bzw. dessen Praktikabilität für die Einmessung oder Kalibrierung von beispielweise einem KMG oder einer WZM.

Insgesamt ermöglicht das Messsystem der vorliegenden Erfindung, entsprechend den Möglichkeiten der Winkelmesseinheit, geringste Messunsicherheiten bei der Messung der Positionierungsinformation, vorzugsweise in 6DOF.

Vorteilhafterweise weist das Messsystem wenigstens zwei seitens des reflektieren Elements angeordnete zweite Lichtquellen auf, die dazu ausgelegt sind, Licht auf den wenigstens einen Sensor zu senden.

Mit zwei zweiten Lichtquellen lässt sich die Genauigkeit des Messsystems, das heißt der Bestimmung der Positionsinformation, entscheidend verbessern. Vorzugsweise sind der Abstand jeder zweiten Lichtquelle zum auf dem reflektierenden Element festgelegten Referenzpunkt und/oder der Abstand der zwei Lichtquellen zueinander bekannt.

Vorteilhafterweise ist die Winkelmesseinheit dazu ausgelegt, wenigstens zwei Einfallswinkel des Lichts jeder ersten Lichtquelle auf den Sensor und wenigstens zwei Einfallswinkel des Lichts jeder zweiten Lichtquelle auf den Sensor zu bestimmen.

Die beiden Einfallswinkel sind dabei zum Beispiel Winkel entlang zweier unterschiedlicher Dimensionen des wenigstens einen Sensors. Dazu kann entweder ein zweidimensionaler Sensor mit in zwei Dimensionen angeordneten Pixeln, oder zwei oder mehr eindimensionale Sensoren mit in jeweils einer Dimension angeordneten Pixeln verwendet werden, wie oben beschrieben. Alternativ können als die zwei Einfallswinkel auch ein Elevationswinkel hinsichtlich der Sensorebene und der Azimutwinkel für eine Lichtquelle bestimmt werden. So kann für jede Lichtquelle eine Positionierung (also Ort und Lage) im Raum exakt ermittelt werden. Daraus wiederum kann die Positionierungsinformation des reflektierenden Elements hochgenau berechnet werden. Insgesamt wird die Messgenauigkeit des Messsystems durch die Messung von zwei statt einem Einfallswinkel pro Lichtquelle deutlich verbessert.

Vorteilhafterweise ist wenigstens eine Lichtquelle eine Punktlichtquelle und ist eine Punktlichtquelle vorzugsweise eine Leuchtdiode oder ein Laser.

Punktlichtquellen haben einen engeren Abstrahlwinkel, wodurch Fehler in der Bestimmung des oder der Einfallswinkel reduziert werden und somit die Genauigkeit des Systems nochmals erhöht wird.

Vorzugsweise ist das reflektierende Element ein Planspiegel mit einer dem Sensor zugewandten Fläche.

Der Planspiegel kann an einem Element oder Körper eines zu kalibrierenden Geräts, bspw. auf einem beweglichen Werkzeugteil einer WZM, angebracht werden. Insbesondere ist der Planspiegel sehr gut für ebene oder flächige Teile einer WZM oder eines KMG geeignet. An dem Planspiegel können die zweiten Lichtquellen angebracht sein, beispielweise auf dessen Oberfläche oder an dessen Rändern, und zusammen mit diesem Planspiegel eine Messkopfeinheit bilden, die sich entsprechend einer Bewegung des zu kalibrierenden Teils relativ zu der Winkelmesseinheit bewegt.

Vorteilhafterweise ist das reflektierende Element wellenlängenselektiv reflektierend.

Diese Wellenlängensensitivität hilft, den Untergrund bei der Messung zu unterdrücken. Das bedeutet, beispielsweise kann auf diese Wiese das Licht anderer Lichtquellen oder vorhandenes Umgebungslicht ausgeblendet bzw. gefiltert werden. Somit ist eine noch genauere Einfallswinkelbestimmung möglich.

Vorteilhafterweise sind vier zweite Lichtquellen seitens des reflektierenden Elements, vorzugsweise an vier Ecken des reflektierenden Elements angeordnet.

Insbesondere ist das reflektierende Element hier bevorzugt ein Planspiegel, bspw. mit runder, quadratischer oder rechteckiger Form. Mit vier Lichtquellen ist eine noch genauere Bestimmung der Positionsinformation möglich. Die Abstände der Lichtquellen zueinander bzw. zu dem festgelegten Referenzpunkt sind dabei vorzugsweise bekannt.

Vorteilhafterweise sind wenigstens zwei zweite Lichtquellen dazu ausgelegt, Licht unterschiedlicher Wellenlänge auszusenden.

Dies hat den Vorteil, dass die verschiedenen Lichtquellen gleichzeitig betrieben werden können, diese aber trotzdem von der Winkelmesseinheit gut anhand ihrer Lichtwellenlängen unterschieden werden können.

Vorteilhafterweise ist wenigstens eine erste Lichtquelle wellenlängenspezifisch.

Dadurch kann der Sensor gezielt auf die spezifische von der Lichtquelle ausgesandte Wellenlänge abgestimmt werden, um eine noch genauere Einfallswinkelmessung durchzuführen.

Vorteilhafterweise ist wenigstens eine erste Lichtquelle zentral der Winkelmesseinheit angeordnet.

Dies liefert weitere Winkelinformation, die insbesondere sensitiv auf Nick- und Gierwinkelabweichungen ist und eine genauere Bestimmung dieser Abweichungen ermöglicht.

Vorteilhafterweise ist wenigstens eine erste Lichtquelle und/oder die wenigstens eine zweite Lichtquelle eine taktbare Lichtquelle.

Dadurch können die verschiedenen Lichtquellen getaktet, beispielsweise eine nach der anderen, betrieben werden. So können Überlagerungsfehler des Lichts verschiedener Lichtquellen oder anderweitige Störungen bei der Messung der Einfallswinkel vermieden werden, was die Bestimmung der Einfallswinkel verbessert.

Vorteilhafterweise ist der Sensor wellenlängensensitiv.

Die Wellenlängensensitivität des wenigstens einen Sensors dient der Untergrundunterdrückung bei der Messung, da der Sensor genau auf die Wellenlängen der Lichtquellen abgestimmt werden kann.

Vorteilhafterweise weist das Messsystem ferner eine Steuereinheit zur zeitlichen Steuerung der Winkelmesseinheit und/oder wenigstens einer der Lichtquellen auf.

Dadurch kann gezielt entweder die Winkelmesseinheit und/oder die Lichtquellen geschaltet werden, um eine Messung durchzuführen. Verschiedene Sensoren können auf verschiedene Lichtquellen abgestimmt sein und von der Steuereinrichtung entsprechend nur paarweise angeschaltet werden.

Vorteilhafterweise weist das Messsystem ferner eine Synchronisierungseinheit zur zeitlichen Synchronisierung der Steuereinheit mit einer externen Steuereinheit auf.

Eine externe Steuereinrichtung kann beispielsweise eine Computerized Numerical Control (CNC) Steuerung einer WZM sein, oder eine Steuerung eines Roboterarms sein. Dadurch kann beispielsweise die WZM und/oder der Roboterarm gezielt eingemessen werden. Ein Verfahren des beweglichen und zu kalibrierenden Teils kann synchron mit der Bestimmung der Positionierungsinformation durchgeführt werden. Das bedeutet, das zu kalibrierende Teil kann Verfahren werden, anschließend eine Messung durchgeführt werden, wieder Verfahren werden, anschließend wieder eine Messung durchgeführt werden usw.

Vorteilhafterweise wird die Berechnung der Positions- und Lageinformation mit der externen Steuereinrichtung so synchronisiert, dass die Zuordnung der Positions- und Lageinformation ohne eine Änderung der Verfahrgeschwindigkeit des zu vermessenden Teils durchgeführt werden kann.

Die vorliegende Erfindung betrifft auch ein Messverfahren, aufweisend die Schritte: Senden von Licht aus wenigstens einer ersten Lichtquelle über ein reflektierendes Element auf wenigstens einen Sensor einer Winkelmesseinheit, Senden von Licht aus wenigstens einer zweiten Lichtquelle auf den wenigstens einen Sensor, wobei die wenigstens eine erste Lichtquelle und die wenigstens eine zweite Lichtquelle jeweils in einem bekannten Abstand zu einem Referenzpunkt auf dem Sensor und einem Referenzpunkt auf dem reflektierenden Element angeordnet sind, wobei in einer Standardstellung des Messsystems der Referenzpunkt auf dem Sensor einen bekannten Abstand zu dem Referenzpunkt auf dem reflektierenden Element hat, Bestimmen von wenigstens einem Einfallswinkel des Lichts jeder ersten Lichtquelle auf den wenigstens einen Sensor und von wenigstens einem Einfallswinkel des Lichts jeder zweiten Lichtquelle auf den wenigstens einen Sensor, und Berechnen von Positionierungsinformation des reflektierenden Elements aus den bestimmten Einfallswinkeln.

Die vorliegende Erfindung wird nun anhand der beigefügten Figuren im Detail erläutert.
Fig. 1 zeigt eine schematische Ansicht eines Messsystems gemäß einer Ausführungsform der vorliegenden Erfindung.
Fig. 2 zeigt eine schematische Ansicht eines Messsystems gemäß einer Ausführungsform der vorliegenden Erfindung.
Fig. 3 zeigt eine schematische Ansicht des Messsystems aus Fig. 2.
Fig. 4 zeigt eine schematische Ansicht des Messsystems aus Fig. 2.
Fig. 5 zeigt eine schematische Ansicht des Messsystems aus Fig. 2.
Fig. 6 zeigt perspektivisch einen Ausschnitt eines Messsystems gemäß der vorliegenden Erfindung.
Fig. 7 zeigt eine Messkopfeinheit bestehend aus einem reflektierenden Element und vier zweiten Lichtquellen gemäß einer Ausführungsform der vorliegenden Erfindung.

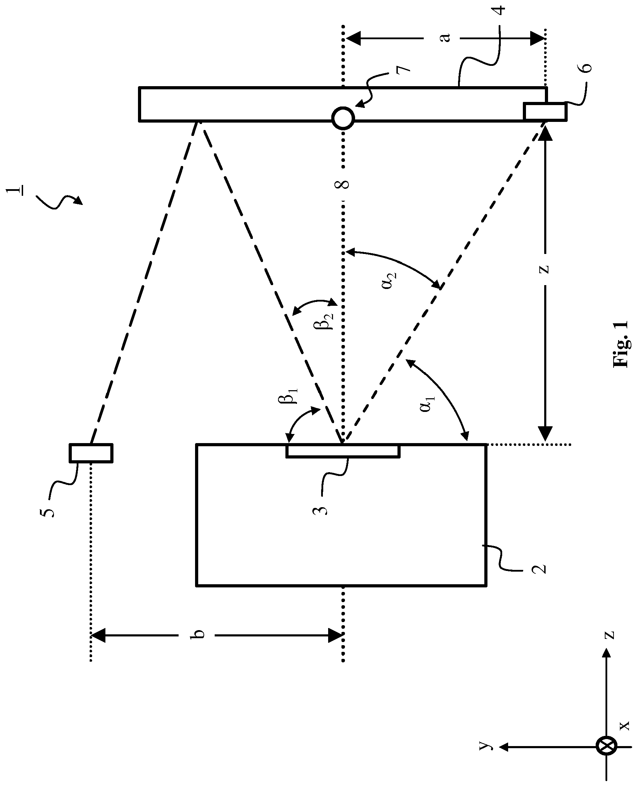

Fig. 1 zeigt eine schematische Ansicht einer Ausführungsform des Messsystems 1 der vorliegenden Erfindung. Das Messsystem 1 ist in Fig. 1 insbesondere in Blickrichtung entlang der x-Achse in die Bildebene hinein dargestellt. Die z- und y-Achsen verlaufen in der Bildebene, wie durch das Koordinatensystem in Fig. 1 veranschaulicht.

Das Messsystem 1 umfasst eine Winkelmesseinheit 2, die hier mit einem Sensor 3 gezeigt ist, wobei die Winkelmesseinheit 2 aber auch mehr als einen Sensor 3 enthalten kann. Beabstandet von der Winkelmesseinheit 2 - hier entlang der z-Achse - umfasst das Messsystem 1 ferner ein reflektierendes Element 4, auf dem bevorzugt ein Referenzpunk 7 festgelegt ist. Seitens des reflektierenden Elements 4, beispielweise neben oder an dem reflektierenden Element 4, zeigt Fig. 1 eine angebrachte zweite Lichtquelle 6, die Licht auf den Sensor 3 senden kann. Das Messsystem 1 kann aber auch mehr als eine zweite Lichtquelle 6 enthalten. Wie in Fig. 1 auch gezeigt, sendet die zweite Lichtquelle 6 bevorzugt Licht direkt auf den Sensor 3. Es ist aber auch durchaus möglich, ein zusätzliches optisches Element, bspw. einen Spiegel, zur optimalen Ausrichtung des Lichts der zweiten Lichtquelle 6 auf den Sensor 3 zwischen der Winkelmesseinheit 2 und der Lichtquelle 6 anzuordnen. Die zweite Lichtquelle 6 ist insbesondere in einem festen und bekannten Abstand a zu dem Referenzpunkt 7 angebracht. Der Abstand z zwischen dem Referenzpunkt 7 und der Winkelmesseinheit 2, insbesondere dem Sensor 3, ist - bis auf für eine Standard- oder Ausgangsstellung des Messsystems 1 - unbekannt.

Seitens der Winkelmesseinheit 2 angeordnet zeigt Fig. 1 eine erste Lichtquelle 5. Das Messsystem 1 kann aber auch mehrere seitens der Winkelmesseinheit 2 angeordnete erste Lichtquellen 5 enthalten. Insbesondere ist die wenigstens eine erste Lichtquelle 5 in einem festen und bekannten Abstand b zur Winkelmesseinheit 2 angeordnet, beispielsweise zu einem festgelegten Referenzpunkt auf der Winkelmesseinheit 2, etwa zu einem bestimmten Referenzpunkt auf dem Sensor 3, wie dessen Zentrum. Fig. 1 zeigt dabei insbesondere eine Stellung, in der das Zentrum des Sensors 3 und der Referenzpunkt 7 auf dem reflektierenden Element 4 entlang einer in z-Richtung verlaufenden Verbindungsachse 8 verbunden sind, wobei insbesondere auch eine Oberfläche des reflektierenden Elements 4 parallel zu einer Oberfläche des Sensors 3 liegt und die Verbindungsachse 8 senkrecht auf diese Oberflächen steht. Die erste Lichtquelle 5 ist dazu ausgelegt, Licht auf das reflektierende Element 4 zu senden, welches von diesem reflektiert wird und dadurch auf den Sensor 3 trifft. Auch hier kann wenigstens ein zusätzliches optisches Element vorhanden sein, bspw. zwischen Winkelmesseinheit 2 und reflektierendem Element 4, um das Licht der ersten Lichtquelle 5 auf das reflektierende Element 4 oder den Sensor 3 auszurichten, z.B. einzuspiegeln.

Die Winkelmesseinheit 2 ist bevorzugt dazu geeignet, den in Fig. 1 gezeigten Einfallswinkel α₁ des Lichts aus der zweiten Lichtquelle 6 auf den wenigstens einen Sensor 3 und den ebenfalls gezeigten Einfallswinkel β₁ des Lichts aus der ersten Lichtquelle 5 auf den wenigstens einen Sensor 3 zu bestimmen. Durch Bestimmung dieser Winkel können durch weitere einfache geometrische Berechnungen auch die in Fig. 1 gezeigten Winkel α₂ und β₂ auf die z-Achse bestimmt werden, da die Oberfläche des Sensors entlang der x- und y-Achse ausgerichtet ist.

Durch Triangulation können mittels der Winkel α₁ und α₂ unter weiterer Berücksichtigung des rechten Winkels (oder unter Annahme eines rechten Winkels) zwischen der z-Achse und dem reflektierendem Element 4, der Abstand z errechnet werden. Auch eine translatorische Abweichung ztz in z-Richtung an einem bestimmten Abstand z, translatorische Abweichungen ztx bzw. zty entlang der x- und/der y-Richtung für einen bestimmten Abstand z Achsen, sowie eine rotatorische Rollwinkelabweichung zrz einer Drehung des reflektierenden Elements 4 um die z-Achse (durch den Referenzpunkt 7) für einen Abstand z können mit hinreichender Genauigkeit bestimmt werden. Aus den in Fig. 1 gezeigten Winkeln β₁ und β₂ lassen sich durch geometrische Überlegungen ferner rotatorische Nick- und Gierwinkelabweichungen des reflektierenden Elements 4 zgx bzw. zny durch Drehung um die x- bzw. y-Achse (durch den Referenzpunkt 7) für einen Abstand z bestimmen.

Bei der Kalibrierung eines KMG oder einer WZM kann beispielweise für ein in z-Richtung verfahrbares Teil, an dem die Messkopfeinheit 4, 6 angebracht ist, für jeden Abstand z ein unterschiedlicher Messwert für ztx, zty, zrz, zgx und zty auftreten. Auch kann an jedem Sollabstand z eine unterschiedliche Abweichung ztz auftreten. So kann KMG oder WZM genau eingemessen werden.

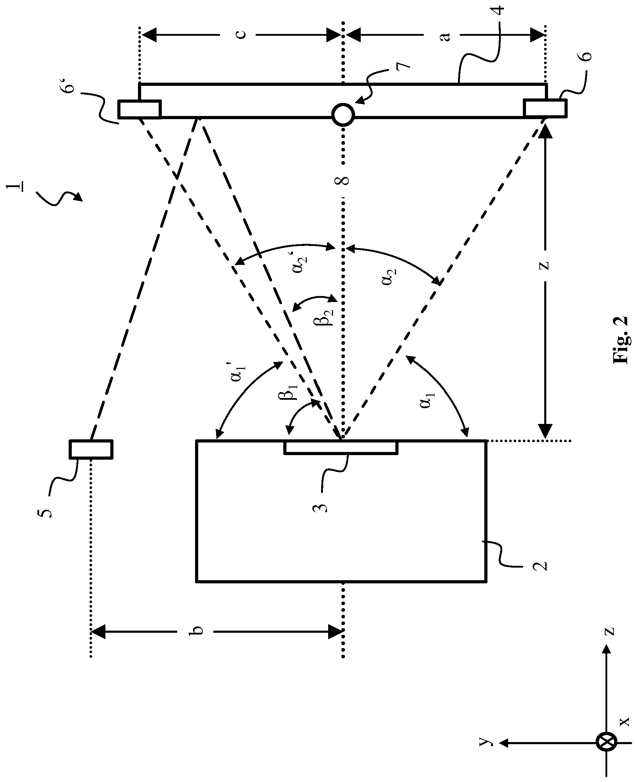

Fig. 2 zeigt eine vorteilhafte Ausführungsform des Messsystem 1 der vorliegenden Erfindung, das seitens des reflektierenden Elements 4 eine weitere zweite Lichtquelle 6' umfasst, die beispielweise neben oder an dem reflektierenden Element 4 angeordnet ist. Auch diese zweite Lichtquelle 6' kann Licht vorzugsweise direkt auf den Sensor 3 senden. Die Winkelmesseinheit 2 kann den in Fig. 2 gezeigten Einfallswinkel α₁' bestimmen und folglich auch den gezeigten Winkel α₂'bestimmen. Der Abstand zwischen den zwei zweiten Lichtquellen 6 und 6' ist vorzugsweise fest und bekannt und ist insbesondere die Summe des festen und bekannten Abstands a der Lichtquelle 6 zum Referenzpunkt 7 und des festen und bekannten Abstands c der Lichtquelle 6' zum Referenzpunkt 7.

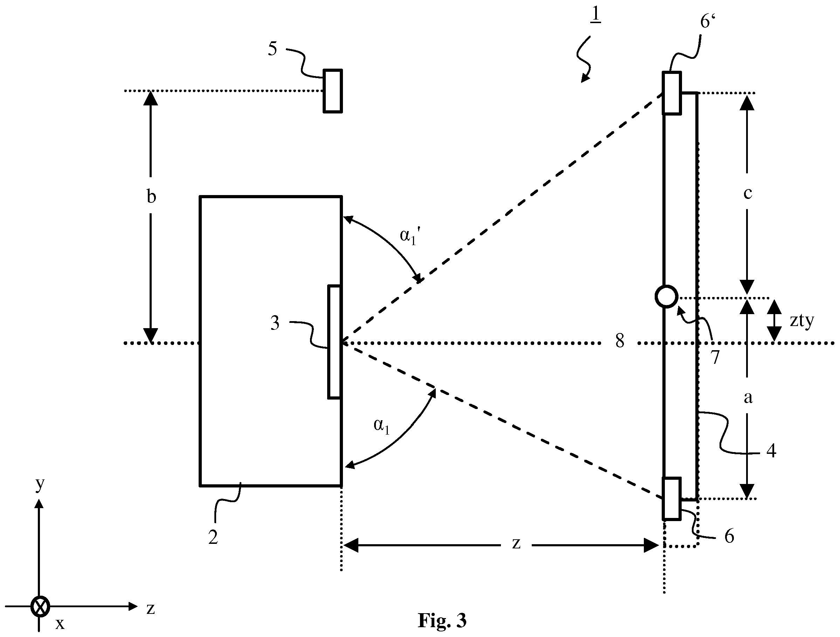

Fig. 3 zeigt das Messsystem aus Fig. 2, bei dem das reflektierende Element 4 aus seiner in Fig. 2 gezeigten Stellung im Abstand z (graue Schattierung) entlang der y-Achse verschoben ist. Beispielsweise kann dieser Fall eintreten, wenn das reflektierende Element 4 auf einem in z-Richtung verfahrbaren Teil aufgebracht ist und bei der Verfahrung dieses Maschinenteils auf den gewünschten Abstand z eine ungewünschte Abweichung zty in y-Richtung entstanden ist.

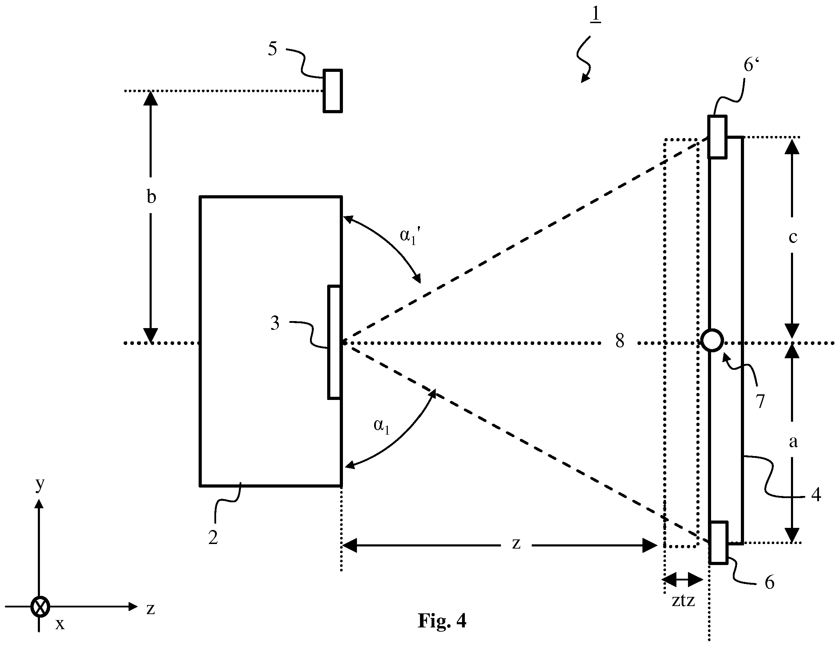

Fig. 4 zeigt das Messsystem aus Fig. 2, bei dem das reflektierende Element 4 aus seiner in Fig. 2 gezeigten Stellung mit Abstand z (graue Schattierung) entlang der z-Achse verschoben ist. Beispielsweise kann dieser Fall eintreten, wenn das reflektierende Element 4 auf einem in z-Richtung verfahrbaren Teil aufgebracht ist und bei der Verfahrung dieses Maschinenteils auf einen gewünschten Abstand z oder einen Sollabstand z eine ungewünschte Abweichung zty in z-Richtung entstanden ist, d.h. ein Verfahren des Maschinenteils auf Abstand z in Wirklichkeit zu einem Abstand z + ztz führt.

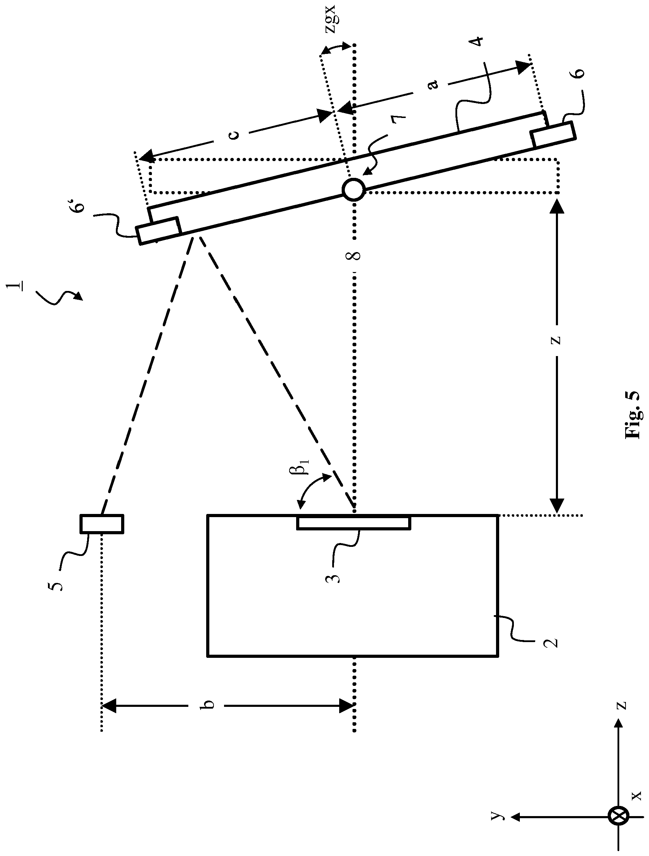

Gleichermaßen, aber nicht gezeigt, kann am Abstand z auch eine Abweichung ztx in x-Richtung vorliegen. Für die Messung von ztz, zty und ztx sind die zweiten Lichtquellen 6 und 6' vorgesehen. Es ist offensichtlich, dass sich bei Auftreten dieser translatorischen Abweichungen die Einfallswinkel α₁ und α₁' verändern. Aus den neuen Einfallswinkeln α₁ und α₁', lässt sich die Ortsverschiebung des Referenzpunkts 7 sehr genau und schnell bestimmen. Entsprechendes gilt für eine (nicht gezeigte) rotatorische Abweichung zrz durch Drehung am Abstand z um die z-Achse (Rollwinkelabweichung) durch den Referenzpunk 7. Fig. 5 zeigt eine andere Abweichung, nämlich eine rotatorische Abweichung zgx des reflektierenden Elements 4 im Abstand z um die x-Achse, die durch den Referenzpunkt 7 läuft (Gierwinkelabweichung). Es ist offensichtlich, dass sich hier der Winkel β₁ hinsichtlich des Einfallswinkels β₁ in Fig. 2 ohne diese Gierwinkelabweichung ändert. Aus dem neuen Winkel β₁ bzw. einer Winkeländerung zu dem Winkel in Fig. 2 kann schnell und genau die rotatorische Gierwinkelabweichung bestimmt werden. Gleiches gilt für eine rotatorische Nickabweichung zny (hier nicht gezeigt), das heißt für eine Drehung des reflektierenden Elements 4 um die y-Achse, die durch den Referenzpunkt 7 läuft.

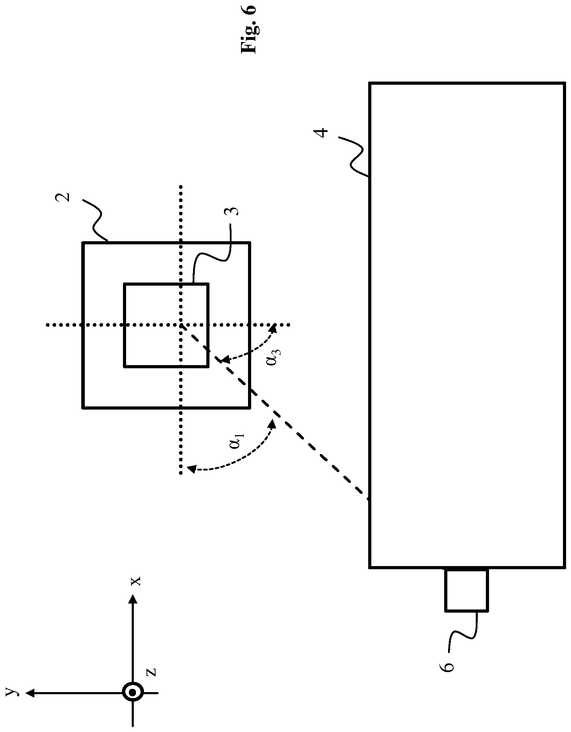

In den Fig. 1 bis 5 ist jeweils der Fall eines pro Lichtquelle 5, 6, 6' bestimmten Einfallswinkels gezeigt. Vorzugsweise ist aber die Bestimmung von wenigstens zwei Einfallswinkeln entlang bspw. zweier Dimensionen des Sensors 3, oder sowohl Elevationsals auch Azimutwinkel, zur noch genaueren Bestimmung vorgesehen. Dies ist in Fig. 6 veranschaulicht. Fig. 6 zeigt eine perspektivische Ansicht der Winkelmesseinheit 2 mit einem zweidimensionalen Sensor 3. Der Sensor 3 ist hier insbesondere zweidimensional entlang der x- und y- Achse ausgerichtet. Die Winkelmesseinheit 2 ist hier dazu ausgelegt, für das Licht aus bspw. der gezeigtem zweiten Lichtquelle 6 sowohl den Einfallswinkel α₁ bezüglich der x-Achse (also einer Dimension des Sensors 3), als auch einen Einfallswinkel α₃ bezüglich der y-Achse (also der zweiten Dimension des Sensors 3) zu bestimmen. Alternativ könnte die Winkelmesseinheit 2 auch einen Elevationswinkel über der Sensorebene und einen Azimutwinkel des einfallenden Lichts bestimmen, um den Ort der Lichtquelle 6 im Raum zu erfassen. Das in Fig. 6 gezeigte Messschema für die Lichtquelle 6 ist ebenso für jede weitere zweite Lichtquelle 6' sowie für das reflektierte Licht jeder ersten Lichtquelle 5 gleichermaßen möglich. Statt einem zweidimensionalen Sensor könnten auch zwei eindimensionale Sensoren (bspw. ausgerichtet einmal in x-Richtung, einmal in y-Richtung) an der Winkelmesseinheit 2 vorhanden sein. Im Übrigen ist eine bekannte Ausrichtung des Sensors oder der Sensoren 3 abweichend von der definierten x- bzw. y-Achse (bzw. eine Ausrichtung nicht orthogonal auf die z-Achse) leicht von der Winkelmesseinheit 2 durch entsprechende Berechnungen korrigierbar

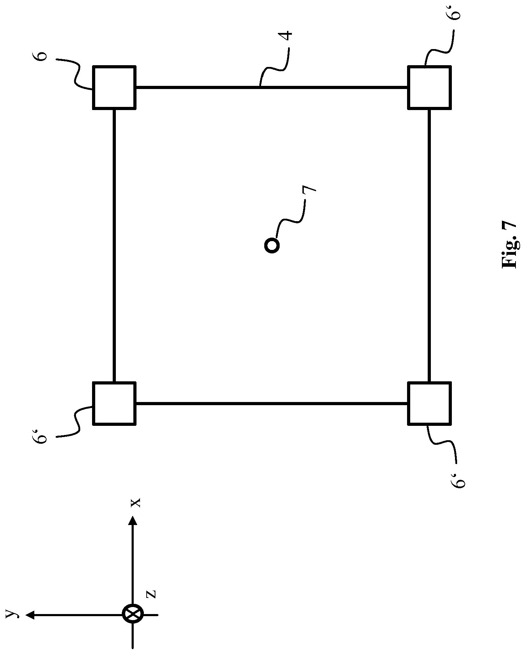

Die Fig. 7 zeigt eine reflektierendes Element 4, insbesondere eine Draufsicht, das hier vorteilhafterweise viereckig abgebildet ist. Der Referenzpunkt 7 ist vorteilhafterweise im Zentrum des reflektierenden Elements 2 festgelegt. Dezentral, nämlich vorteilhafterweise an den vier Ecken des reflektierenden Elements 4, sind vier zweite Lichtquellen 6 bzw. 6' in festen und bekannten Abständen zueinander und auch zum Referenzpunkt 7 angeordnet. Alle vier Lichtquellen 6, 6' sind dazu geeignet, Licht auf den wenigstens einen Sensor 3 der Winkelmesseinheit 2 zu senden. Die Winkelmesseinheit 2 kann dann für jedes Licht aus jeder der Lichtquellen 6, 6' einen Einfallswinkel, vorteilhalterweise zwei oder mehr Einfallswinkel bestimmen, um zusammen mit wenigstens einer ersten Lichtquelle 5 eine hochgenaue Bestimmung der Positionsinformation, insbesondere in 6DOF zu berechnen.

In allen in Fig. 1-6 gezeigten Messsystemen 1 können die Lichtquellen 5, 6, 6' wellenlängenspezifisch sein und verschiedene Lichtquellen 5, 6, 6' vorteilhafterweise Licht unterschiedlicher Wellenlängen abstrahlen. Die Lichtquellen 5, 6, 6' können auch taktbare Lichtquellen sein. So kann farbliches und/oder zeitliches Multiplexen der Lichtquellen realisiert werden. Der Sensor 3 kann in jedem gezeigten Messsystem 1 wellenlängensensitiv bzw. wellenlängenselektiv sein. Ebenso kann das reflektierende Element 4 oder jedes weitere verwendete optische Element wellenlängenselektiv sein.

Die vorliegende Erfindung umfasst auch ein Messverfahren entsprechend des vorgestellten Messsystems 1, also ein Messverfahren aufweisend die folgenden Schritte. Einen Schritt des Sendens von Licht aus wenigstens einer seitens einer Winkelmesseinheit 2 angeordneten ersten Lichtquelle 5 über ein der Winkelmesseinheit 2 gegenüberliegend angeordnetes reflektierendes Element 4 auf wenigstens einen Sensor 3 der Winkelmesseinheit 2. Einen Schritt des Sendens von Licht aus wenigstens einer seitens des reflektierenden Elements 4 angeordneten zweiten Lichtquelle 6, 6' auf den wenigstens einen Sensor 3. Einen Schritt des Bestimmens, durch die Winkelmesseinheit 2, von wenigstens einem Einfallswinkel β₁ des Lichts jeder ersten Lichtquelle 5 auf den wenigstens einen Sensor 3 und von wenigstens einem Einfallswinkels α₁, α₁' des Lichts jeder zweiten Lichtquelle 6, 6' auf den wenigstens einen Sensor 3. Und einen Schritt des Berechnens, durch die Winkelmesseinheit 2, von Positionierungsinformation des reflektierenden Elements 4 aus den bestimmten Einfallswinkeln β₁, α₁, α₁'.

Als nicht erfindungsgemäße Variante der vorgestellten Messsysteme 1, ist auch die Konstruktion eines Messsystems ohne zweite Lichtquelle(n) 6, 6' möglich. Ein solches Messsystem umfasst also eine Winkelmesseinheit 2 mit wenigstens einem Sensor 3, ein der Winkelmesseinheit 2 gegenüberliegendes reflektierendes Element 4 und wenigstens eine seitens der Winkelmesseinheit 2 angeordnete erste Lichtquelle 5, die dazu ausgelegt ist, Licht über das reflektierende Element 4 auf den wenigstens einen Sensor 3 zu senden. Die Winkelmesseinheit 2 ist in diesem Messsystem dazu ausgelegt, wenigstens einen Einfallswinkel des Lichts jeder ersten Lichtquelle 5 auf den wenigstens einen Sensor 3 zu bestimmen. Die Winkelmesseinheit 2 ist ferner dazu ausgelegt, Positionierungsinformation des reflektierenden Elements 4 aus den bestimmten Einfallswinkeln zu berechnen. Ein solches Messsystem kann vorteilhafterweise zur Bestimmung von Nick- Gier- und Rollwinkel des reflektierenden Elements 4, bspw. für ein Autokollimationsfernrohr verwendet werden.

Als weitere nicht erfindungsgemäße Variante der vorgestellten Messsysteme 1, ist auch die Konstruktion eines Messsystems ohne das reflektierende Element 4 und ohne erste Lichtquelle(n) 5 möglich. Ein solches Messsystem umfasst also eine Winkelmesseinheit 2 mit wenigstens einem Sensor 3 und wenigstens eine der Winkelmesseinheit 2 gegenüberliegend angeordnete Lichtquelle 6, 6', die dazu ausgelegt ist, Licht auf den wenigstens einen Sensor 3 zu senden. Die Winkelmesseinheit 2 ist in diesem Messsystem dazu ausgelegt, wenigstens einen Einfallswinkel des Lichts jeder Lichtquelle 6, 6' auf den wenigstens einen Sensor 3 zu bestimmen. Die Winkelmesseinheit 2 ist ferner dazu ausgelegt, Positionierungsinformation der Lichtquelle(n) 6. 6' aus den bestimmten Einfallswinkeln zu berechnen. Ein solches Messsystem kann vorteilhafterweise zur Bestimmung von Translationen entlang dreier Achsen x, y, z (und zur Bestimmung des Rollwinkels zrz) verwendet werden.

Insgesamt stellt die vorliegende Erfindung verbesserte Messsystem vor, die es ermöglichen eine hochpräzise Positionierungsmessung des reflektierenden Elements 4 durchzuführen und dadurch eine hochpräzise Messung eines Elements oder Körpers im Raum, auf dem das reflektierenden Element 4 an- oder aufgebracht ist, zu messen.

## Patentansprüche

1. Messsystem (1), aufweisend
eine Winkelmesseinheit (2) mit wenigstens einem Sensor (3),
ein der Winkelmesseinheit (2) gegenüberliegendes reflektierendes Element (4),
wenigstens eine seitens der Winkelmesseinheit (2) angeordnete erste Lichtquelle (5), die dazu ausgelegt ist, Licht über das reflektierende Element (4) auf den wenigstens einen Sensor (3) zu senden, und
wenigstens eine seitens des reflektierenden Elements (4) angeordnete zweite Lichtquelle (6, 6'), die dazu ausgelegt ist, Licht auf den wenigstens einen Sensor (3) zu senden,
wobei die wenigstens eine erste Lichtquelle (5) und die wenigstens eine zweite Lichtquelle (6, 6') jeweils in einem bekannten Abstand zu einem Referenzpunkt auf dem Sensor (3) und einem Referenzpunkt auf dem reflektierenden Element (4) angeordnet sind,
wobei in einer Standardstellung des Messsystems (1) der Referenzpunkt auf dem Sensor (3) einen bekannten Abstand zu dem Referenzpunkt auf dem reflektierenden Element (4) hat,
wobei die Winkelmesseinheit (2) dazu ausgelegt ist, wenigstens einen Einfallswinkel (ßi) des Lichts jeder ersten Lichtquelle (5) auf den wenigstens einen Sensor (3) und wenigstens einen Einfallswinkel (α₁, α₁') des Lichts jeder zweiten Lichtquelle (6, 6') auf den wenigstens einen Sensor (3) zu bestimmen, und
wobei die Winkelmesseinheit (2) dazu ausgelegt ist, Positionierungsinformation, also Ort und Lage, des reflektierenden Elements (4) aus den bestimmten Einfallswinkeln (β₁, α₁, α₁') zu berechnen.

2. Messsystem (1) gemäß Anspruch 1, aufweisend
wenigstens zwei seitens des reflektierenden Elements (4) angeordnete zweite Lichtquellen (6, 6'), die dazu ausgelegt sind, Licht auf den wenigstens einen Sensor (3) zu senden.

3. Messsystem (1) gemäß Anspruch 1 oder 2,
wobei die Winkelmesseinheit (2) dazu ausgelegt ist, wenigstens zwei Einfallswinkel (β₁, β₃) des Lichts jeder ersten Lichtquelle (5) auf den wenigstens einen Sensor (3) und wenigstens zwei Einfallswinkel (α₁, α₃; α₁', α₃') des Lichts jeder zweiten Lichtquellen (6, 6') auf den wenigstens einen Sensor (3) zu bestimmen.

4. Messsystem (1) gemäß einem der Ansprüche 1 bis 3,
wobei wenigstens eine Lichtquelle (5, 6, 6') eine Punktlichtquelle ist und
wobei eine Punktlichtquelle vorzugsweise eine Leuchtdiode oder ein Laser ist.

5. Messsystem (1) gemäß einem der Ansprüche 1 bis 4,
wobei das reflektierende Element (4) ein Planspiegel mit einer dem wenigstens einen Sensor (3) zugewandten Fläche ist.

6. Messsystem (1) gemäß einem der Ansprüche 1 bis 5, wobei
das reflektierende Element (4) wellenlängenselektiv reflektierend ist.

7. Messsystem (1) gemäß einem der Ansprüche 1 bis 6,
wobei vier zweite Lichtquellen (6, 6') seitens des reflektierenden Elements (4), vorzugsweise an vier Ecken des reflektierenden Elements (4) angeordnet sind.

8. Messsystem (1) gemäß einem der Ansprüche 1 bis 7, wobei
wenigstens zwei zweite Lichtquellen (6, 6') dazu ausgelegt sind, Licht unterschiedlicher Wellenlängen auszusenden.

9. Messsystem (1) gemäß einem der Ansprüche 1 bis 8, wobei
wenigstens eine erste Lichtquelle (5) wellenlängenspezifisch ist.

10. Messsystem (1) gemäß einem der Ansprüche 1 bis 9, wobei
wenigstens eine erste Lichtquelle (5) zentral der Winkelmesseinheit (1) angeordnet ist.

11. Messsystem (1) gemäß einem der Ansprüche 1 bis 10, ferner aufweisend
wenigstens ein optisches Element zum Einspiegeln des Lichts wenigstens einer ersten Lichtquelle (5).

12. Messsystem (1) gemäß einem der Ansprüche 1 bis 11, wobei
die wenigstens eine erste Lichtquelle (5) und/oder die wenigstens eine zweite Lichtquelle (6, 6') eine taktbare Lichtquelle ist.

13. Messsystem (1) gemäß einem der Ansprüche 1 bis 12, wobei
der Sensor (3) wellenlängensensitiv ist.

14. Messsystem (1) gemäß einem der Ansprüche 1 bis 13, ferner aufweisend
eine Steuereinheit zur zeitlichen Steuerung der Winkelmesseinheit (2) und/oder wenigstens einer der Lichtquellen (5, 6, 6').

15. Messsystem (1) gemäß Anspruch 14, ferner aufweisend
eine Synchronisierungseinheit zur zeitlichen Synchronisation der Steuereinheit mit einer externen Steuereinrichtung.

16. Messverfahren, aufweisend die Schritte:
Senden von Licht aus wenigstens einer ersten Lichtquelle (5) über ein reflektierendes Element (4) auf wenigstens einen Sensor (3) einer Winkelmesseinheit (2),
Senden von Licht aus wenigstens einer zweiten Lichtquelle (6, 6') auf den wenigstens einen Sensor (3),
wobei die wenigstens eine erste Lichtquelle (5) und die wenigstens eine zweite Lichtquelle (6, 6') jeweils in einem bekannten Abstand zu einem Referenzpunkt auf dem Sensor (3) und einem Referenzpunkt auf dem reflektierenden Element (4) angeordnet sind,
wobei in einer Standardstellung des Messsystems (1) der Referenzpunkt auf dem Sensor (3) einen bekannten Abstand zu dem Referenzpunkt auf dem reflektierenden Element (4) hat,
Bestimmen von wenigstens einem Einfallswinkel (β₁) des Lichts jeder ersten Lichtquelle (5) auf den wenigstens einen Sensor (3) und von wenigstens einem Einfallswinkel (α₁, α₁') des Lichts jeder zweiten Lichtquelle (6, 6') auf den wenigstens einen Sensor (3), und
Berechnen von Positionierungsinformation, also Ort und Lage, des reflektierenden Elements (4) aus den bestimmten Einfallswinkeln (β₁, α₁, α₁').

## Claims

1. Measurement system (1), having
an angle measurement unit (2) having at least one sensor (3),
a reflective element (4) arranged opposite the angle measurement unit (2),
at least one first light source (5), which is arranged next to the angle measurement unit (2) and is designed to transmit light via the reflective element (4) onto the at least one sensor (3), and
at least one second light source (6, 6'), which is arranged next to the reflective element (4) and is designed to transmit light onto the at least one sensor (3),
wherein the at least one first light source (5) and the at least one second light source (6, 6') are arranged at a known distance from a reference point on the sensor (3) and a reference point on the reflective element (4), respectively,
wherein, in a standard setting of the measurement system (1), the reference point on the sensor (3) has a known distance from the reference point on the reflective element (4),
wherein the angle measurement unit (2) is designed to determine at least one angle of incidence (β₁) of the light of each first light source (5) onto the at least one sensor (3) and at least one angle of incidence (α₁, α₁') of the light of each second light source (6, 6') onto the at least one sensor (3), and
wherein the angle measurement unit (2) is designed to calculate from the determined angles of incidence (β₁, α₁, α₁') positioning information, that is to say location and relative orientation, of the reflective element (4).

2. Measurement system (1) according to Claim 1, having at least two second light sources (6, 6'), which are arranged next to the reflective element (4) and are designed to transmit light onto the at least one sensor (3) .

3. Measurement system (1) according to Claim 1 or 2, wherein the angle measurement unit (2) is designed to determine at least two angles of incidence (β₁, β₃) of the light of each first light source (5) onto the at least one sensor (3) and at least two angles of incidence (α₁, α₃; α₁', α₃') of the light of each second light source (6, 6') onto the at least one sensor (3).

4. Measurement system (1) according to one of Claims 1 to 3,
wherein at least one light source (5, 6, 6') is a point light source and
wherein a point light source is preferably a light-emitting diode or a laser.

5. Measurement system (1) according to one of Claims 1 to 4,
wherein the reflective element (4) is a plane mirror having a surface that faces the at least one sensor (3).

6. Measurement system (1) according to one of Claims 1 to 5, wherein
the reflective element (4) is reflective in a wavelength-selective manner.

7. Measurement system (1) according to one of Claims 1 to 6,
wherein four second light sources (6, 6') are arranged next to the reflective element (4), preferably at four corners of the reflective element (4).

8. Measurement system (1) according to one of Claims 1 to 7, wherein
at least two second light sources (6, 6') are designed to emit light of different wavelengths.

9. Measurement system (1) according to one of Claims 1 to 8, wherein
at least one first light source (5) is wavelength-specific.

10. Measurement system (1) according to one of Claims 1 to 9, wherein
at least one first light source (5) is arranged centrally with respect to the angle measurement unit (1).

11. Measurement system (1) according to one of Claims 1 to 10, furthermore having
at least one optical element for the reflective adjustment of the light of at least one first light source (5) .

12. Measurement system (1) according to one of Claims 1 to 11, wherein
the at least one first light source (5) and/or the at least one second light source (6, 6') is a time-cyclable light source.

13. Measurement system (1) according to one of Claims 1 to 12, wherein
the sensor (3) is wavelength-sensitive.

14. Measurement system (1) according to one of Claims 1 to 13, furthermore having
a control unit for temporally controlling the angle measurement unit (2) and/or at least one of the light sources (5, 6, 6').

15. Measurement system (1) according to Claim 14, furthermore having
a synchronization unit for temporally synchronizing the control unit with an external control device.

16. Measurement method, having the steps of:
transmitting light from at least one first light source (5) via a reflective element (4) onto at least one sensor (3) of an angle measurement unit (2),
transmitting light from at least one second light source (6, 6') onto the at least one sensor (3),
wherein the at least one first light source (5) and the at least one second light source (6, 6') are arranged at a known distance from a reference point on the sensor (3) and a reference point on the reflective element (4), respectively,
wherein, in a standard setting of the measurement system (1), the reference point on the sensor (3) has a known distance from the reference point on the reflective element (4),
determining at least one angle of incidence (β₁) of the light of each first light source (5) onto the at least one sensor (3) and at least one angle of incidence (α₁, α₁') of the light of each second light source (6, 6') onto the at least one sensor (3), and
calculating from the determined angles of incidence (β₁, α₁, α₁') positioning information, that is to say location and relative orientation, of the reflective element (4).

## Revendications

1. Système de mesure (1), comportant une unité de mesure angulaire (2) munie d'au moins un capteur (3), un élément réfléchissant (4) opposé à l'unité de mesure angulaire (2),
au moins une première source lumineuse (5) disposée du côté de l'unité de mesure angulaire (2), qui est conçue pour émettre de la lumière par l'intermédiaire de l'élément réfléchissant (4) vers ledit au moins un capteur (3), et
au moins une deuxième source lumineuse (6, 6') disposée du côté de l'élément réfléchissant (4), qui est conçue pour émettre de la lumière vers ledit au moins un capteur (3),
dans lequel ladite au moins une première source lumineuse (5) et ladite au moins une deuxième source lumineuse (6, 6') sont respectivement disposées à une distance connue d'un point de référence sur le capteur (3) et d'un point de référence sur l'élément réfléchissant (4),
dans lequel, dans une position normale du système de mesure (1), le point de référence sur le capteur (3) est à une distance connue du point de référence sur l'élément réfléchissant (4),
dans lequel l'unité de mesure angulaire (2) est conçue pour déterminer au moins un angle d'incidence (β₁) de la lumière de chaque première source lumineuse (5) sur ledit au moins un capteur (3) et au moins un angle d'incidence (α₁, α₁') de la lumière de chaque deuxième source lumineuse (6, 6') sur ledit au moins un capteur (3), et dans lequel l'unité de mesure angulaire (2) est conçue pour calculer des informations de positionnement, c'est-à-dire l'emplacement et la position de l'élément réfléchissant (4) à partir des angles d'incidence (β₁, α₁, α₁') déterminés.

2. Système de mesure (1) selon la revendication 1, comportant
au moins deux deuxièmes sources lumineuses (6, 6') disposées du côté de l'élément réfléchissant (4) et conçues pour émettre de la lumière vers ledit au moins un capteur (3).

3. Système de mesure (1) selon la revendication 1 ou 2,
dans lequel l'unité de mesure angulaire (2) est conçue pour déterminer au moins deux angles d'incidence (β₁, β₃) de la lumière de chaque première source lumineuse (5) sur ledit au moins un capteur (3) et au moins deux angles d'incidence (α₁, α₃ ; α₁', α₃') de la lumière de chaque deuxième source lumineuse (6, 6') sur ledit au moins un capteur (3).

4. Système de mesure (1) selon l'une des revendications 1 à 3,
dans lequel au moins une source lumineuse (5, 6, 6') est une source lumineuse ponctuelle et
dans lequel une source lumineuse ponctuelle est de préférence une diode électroluminescente ou un laser.

5. Système de mesure (1) selon l'une des revendications 1 à 4,
dans lequel l'élément réfléchissant (4) est un miroir plan présentant une surface tournée vers ledit au moins un capteur (3).

6. Système de mesure (1) selon l'une des revendications 1 à 5, dans lequel
l'élément réfléchissant (4) est réfléchissant de manière sélective en longueur d'onde.

7. Système de mesure (1) selon l'une des revendications 1 à 6,
dans lequel quatre deuxièmes sources lumineuses (6, 6') sont disposées du côté de l'élément réfléchissant (4), de préférence aux quatre angles de l'élément réfléchissant (4).

8. Système de mesure (1) selon l'une des revendications 1 à 7, dans lequel
au moins deux deuxièmes sources lumineuses (6, 6') sont conçues pour émettre de la lumière de différentes longueurs d'onde.

9. Système de mesure (1) selon l'une des revendications 1 à 8, dans lequel au moins une première source lumineuse (5) est spécifique de la longueur d'onde.

10. Système de mesure (1) selon l'une des revendications 1 à 9, dans lequel
au moins une première source lumineuse (5) est disposée au centre de l'unité de mesure angulaire (1).

11. Système de mesure (1) selon l'une des revendications 1 à 10, comportant en outre
au moins un élément optique destiné à réfléchir la lumière d'au moins une première source lumineuse (5).

12. Système de mesure (1) selon l'une des revendications 1 à 11, dans lequel
ladite au moins une première source lumineuse (5) et/ou ladite au moins une deuxième source lumineuse (6, 6') est une source lumineuse cadencée.

13. Système de mesure (1) selon l'une des revendications 1 à 12, dans lequel
le capteur (3) est sensible à la longueur d'onde.

14. Système de mesure (1) selon l'une des revendications 1 à 13, comportant en outre
une unité de commande destinée à la commande temporelle de l'unité de mesure angulaire (2) et/ou d'au moins l'une des sources lumineuses (5, 6, 6').

15. Système de mesure (1) selon la revendication 14, comportant en outre
une unité de synchronisation destinée à la synchronisation temporelle de l'unité de commande avec un dispositif de commande externe.

16. Procédé de mesure, comprenant les étapes suivantes :
émettre une lumière provenant d'au moins une première source lumineuse (5) par l'intermédiaire d'un élément réfléchissant (4) vers au moins un capteur (3) d'une unité de mesure angulaire (2),
émettre une lumière provenant d'au moins une deuxième source lumineuse (6, 6') vers ledit au moins un capteur (3),
dans lequel ladite au moins une première source lumineuse (5) et ladite au moins une deuxième source lumineuse (6, 6') sont respectivement disposées à une distance connue d'un point de référence sur le capteur (3) et d'un point de référence sur l'élément réfléchissant (4),
dans lequel, dans une position standard du système de mesure (1), le point de référence sur le capteur (3) présente une distance connue par rapport au point de référence sur l'élément réfléchissant (4),
déterminer au moins un angle d'incidence (β₁) de la lumière de chaque première source lumineuse (5) sur ledit au moins un capteur (3) et au moins un angle d'incidence (α₁, α₁') de la lumière de chaque deuxième source lumineuse (6, 6') sur ledit au moins un capteur (3), et
calculer des informations de positionnement, c'est-à-dire l'emplacement et la position, de l'élément réfléchissant (4) à partir des angles d'incidence (β₁, α₁, α₁') déterminés.
